(19) Europäisches Patentamt
European Patent Office
Office européen des brevets

(11) Veröffentlichungsnummer : **0 166 034**
**B1**

(12) **EUROPÄISCHE PATENTSCHRIFT**

(45) Veröffentlichungstag der Patentschrift : **04.05.88**

(51) Int. Cl.⁴ : **G 01 F 23/22**

(21) Anmeldenummer : **84116361.1**

(22) Anmeldetag : **27.12.84**

# (54) Verfahren und Einrichtung zur elektrothermischen, Umgebungstemperatur-kompensierten Füllstandsmessung.

(30) Priorität : **28.06.84 DE 3423802**

(43) Veröffentlichungstag der Anmeldung : **02.01.86 Patentblatt 86/01**

(45) Bekanntmachung des Hinweises auf die Patenterteilung : **04.05.88 Patentblatt 88/18**

(84) Benannte Vertragsstaaten : **DE FR GB IT NL SE**

(56) Entgegenhaltungen :
**EP-A- 0 029 091**
**EP-A- 0 076 766**
**DE-A- 3 237 396**
**DE-B- 2 740 289**

(73) Patentinhaber : **VDO Adolf Schindling AG**
**Gräfstrasse 103**
**D-6000 Frankfurt/Main (DE)**

(72) Erfinder : **Schneider, Dieter, Dipl.-Phys.**
**Im Sperber 18**
**D-6000 Frankfurt-Main 60 (DE)**

(74) Vertreter : **Klein, Thomas, Dipl.-Ing. (FH)**
**Sodener Strasse 9 Postfach 6140**
**D-6231 Schwalbach a. Ts. (DE)**

**EP 0 166 034 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur elektrothermischen, Umgebungstemperatur-kompensierten Füllstandmessung nach dem Oberbegriff des Anspruchs 1.

Ein weiterer Aspekt der Erfindung betrifft Schaltungsanordnungen zur Ausübung des betreffenden Verfahrens nach den Ansprüchen 5 und 6.

Es ist bekannt, daß die Füllhöhe von Flüssigkeiten mit einer Widerstandssonde gemessen werden kann, die aus einem langgestreckten temperaturabhängigen Widerstand mit positivem Temperaturkoeffizienten besteht. Diese Widerstandssonde wird durch einen Konstantstrom aufgeheizt. Die so erzeugte Wärme wird entsprechend einem thermischen Übergangswiderstand an die Umgebung abgegeben, der davon abhängig ist, inwieweit die Widerstandssonde in das Flüssigmedium eintaucht oder von dem gasförmigen Medium umgeben ist. Die Erwärmung der Widerstandssonde bewirkt eine Erhöhung des Widerstandes während der Aufheizzeit. Die zeitliche Widerstandsänderung hängt dabei vom Anfangswiderstand der Widerstandssonde, dem Temperaturkoeffizienten, dem Konstantstrom und dem thermischen Übergangswiderstand ab. Die Temperaturabhängigkeit des Anfangswiderstandes zu Beginn des Konstantstromes, wenn sich dieser noch nicht auf die Widerstandserhöhung auswirken kann, ist für genauere Messungen des Füllstandes zu kompensieren.

Hierauf wird weiter unten eingegangen. Unter der Voraussetzung, daß der Temperaturkoeffizient und der Konstantstrom während der Messung konstant sind, hängt der zeitliche Verlauf der Widerstandsänderung vom thermischen Übergangswiderstand bzw. der Eintauchtiefe in das flüssige Medium ab. Aus der Widerstandsänderung ergibt sich dabei eine Sondenspannungsänderung, die ausgewertet wird. Die Auswertung geht ebenfalls in die Meßgenauigkeit ein. Die bisherigen Auswertverfahren nutzen die zeitliche Änderung der Sondenspannung durch eine Differenzierung oder durch Ermittlung der Spannungsdifferenz nach einer bestimmten Zeit, d. h. in der Regel zu Anfang und zum Ende der Aufheizzeit, zur Bestimmung der Eintauchtiefe aus.

Läßt man die Widerstandssonde durch Abschalten des Konstantstroms sich über eine genügend lange Zeit abkühlen, so sind wiederholte Messungen während der Meßperioden möglich.

Bei einer derartigen bekannten Schaltungsanordnung wird die Widerstandssonde durch eine Ablaufsteuerung (Verzögerungsschaltung) gesteuert mit jedem Meßbeginn (Beginn einer Meßperiode) an eine Konstantstromquelle gelegt, die während der Aufheizzeit angeschaltet bleibt. Die Verzögerungsschaltung steht mit einem Vergleicher in Verbindung. Der Vergleicher ist einerseits mit einem an die Widerstandssonde angeschlossenen Inverter und einem dazu parallelgeschalteten Widerstandskondensatorglied verbunden, und zwar so, daß der Vergleicher ein Ausgangssignal an eine Überwachungsvorrichtung abgibt, sobald die über das Widerstandskondensatorglied abfallende Spannung gleich derjenigen des Inverters ist (DE-OS 27 40 289). Das Meßprinzip beruht wiederum darauf, daß die Widerstandsänderung der Widerstandssonde, die mehr oder weniger von dem zu messenden Fluid umgeben ist, gemessen wird, die sich am Ende einer Aufheizzeit durch einen Konstantstrom einstellt. Üblicherweise wird dabei die Differenz der Spannung $U_1$ am Ende der Aufheizzeit gegenüber einer Anfangsspannung $U_0$ zu deren Beginn erfaßt. Damit das Ergebnis dieser Messung unabhängig von der Umgebungstemperatur ist, wird nach diesem Stand der Technik im einzelnen vorgesehen: Der Inverter liefert zum Zeitpunkt des Einschaltens der Widerstandssonde eine Spannung $V\text{-}U_0$, die den Kondensator des Widerstandskondensatorglieds auflädt. Dieser entlädt sich dann nach einer bekannten Gesetzmäßigkeit, die durch den Widerstandswert und die Kapazität bestimmt ist. Wenn sich im weiteren Verlauf der Aufheizzeit die Widerstandssonde erwärmt, nimmt die Spannung U zu und der Inverter liefert eine Spannung der Form V-U, die von der Eintauchtiefe der Widerstandssonde abhängig ist. Mit dem Vergleicher wird der Zeitpunkt erfaßt, zu dem der Spannungsverlauf des Kondensators (Aufladungskurve), der als Gerade darstellbar ist, die Kurve der invertierten Spannung V-U schneidet. Zu einem durch die Ablaufsteuerung bestimmten Zeitpunkt wird der Vergleicher so gesteuert, daß ein Vergleich zwischen dem Wert der invertierten Spannung $V\text{-}U_0$ an den Anschlüssen des Widerstandskondensatorglieds und dem Wert der an dem Inverter liegenden Spannung durchgeführt wird. Eine mit dem Ausgang des Vergleichers verbundene Überwachungsvorrichtung kann hierbei bei Überschreiten eines vorgebbaren Schwellwerts einen Alarm auslösen. — Generell kann nach diesem Stand der Technik das Niveau einer Flüssigkeit mit numerischen oder analogen Anzeigeinstrumenten angezeigt werden.

Um die Genauigkeit zur elektrothermischen, Umgebungstemperatur-kompensierten Füllstandmessung mit geringem Aufwand zu verbessern, ist auch bereits vorgeschlagen worden, bei einer Schaltungsanordnung mit einem Vergleicher, der eine aus einer Anfangsspannung an der Widerstandssonde zu Beginn einer Aufheizzeit gebildete erste Größe mit einer aus einer Aufheizspannung am Ende einer Aufheizzeit gebildeten zweiten Größe vergleicht, den Widerstand und den Kondensator zusammen mit einem Operationsverstärker als Integrator anzuordnen, dessen Eingang über ein Abtast- und Halteglied für die Anfangsspannung mit der Widerstandssonde koppelbar ist und dessen Ausgang mit einem ersten Eingang eines Komparators in Verbindung steht. Der zweite Eingang des Kompensators wird dabei über ein weiteres Abtast- und Halteglied direkt zur Weiterleitung der Aufheizspannung am Ende

einer Aufheizzeit mit der Widerstandssonde gekoppelt. Mit einem Ausgang des Komparators ist ein voreinstellbarer Rückwärtszähler zum Erfassen der Zeit zwischen Betätigung des zweiten Abtast- und Halteglieds und dem Umschalten des Komparators angeschlossen. Diese Schaltungsanordnung mißt also die Zeit als dem Füllstand annähernd proportionale Größe (Patentanmeldung P 29 46 585.8).

In einer weiteren Schaltungsanordnung zur elektrothermischen Umgebungstemperatur-kompensierten Füllstandsmessung (EP-A1-0076766 wird die Sondenspannung spannungsfrequenzgewandelt und während gleicher Zeitabschnitte zu Beginn und zum Ende der Aufheizzeit die Anzahl der Schwingungen vom Ausgang des Spannungs--Frequenz-Wandlers gezählt und das erste Zählergebnis vom zweiten abgezogen. Die Differenz ist ein Maß für den jeweiligen Füllstand.

Zur Temperaturkompensation bei der elektrothermischen Füllstandmessung ist ferner die Verwendung eines gesonderten Kompensationswiderstands bekannt, der in Reihe zu der Widerstandssonde an einen Eingang eins invertierenden Verstärkers angeschlossen wird (VDO Paper, Haub et al). Der Kompensationswiderstand soll vorzugsweise in der Nähe des Widerstandsfühlers angeordnet werden und von einem möglichst kleinen Strom durchflossen werden, um eine Aufheizung zu vermeiden. — Wenn aber der Kompensationswiderstand in dem Behälter in der Nähe des Widerstandsfühlers angeordnet wird, ergibt sich die Notwendigkeit einen zusätzlichen Anschluß herauszuführen. Außerdem ist es schwierig, einen Kompensationswiderstand mit gleichem Temperatorkoeffizienzen wie dem Meßfühler zu finden.

Alle diese voranstehend erörterten Verfahren und Schaltungsanordnungen haben jedoch den Nachteil, daß sich bei ihnen Störimpulse der Stromversorgung, wie sie insbesondere in Kraftfahrzeugen häufig vorkommen, nachteilig auf das Meßergebnis auswirken.

Der Erfindung liegt daher die Aufgabe zugrunde, ein Verfahren der eingangs genannten Gattung so weiterzubilden, daß Störimpulse der Versorgungsspannung, die sich auf die Sondenspannung zu Beginn der Aufheizzeit und auf die Sondenspannung zum Ende der Aufheizzeit unterschiedlich auswirken können, das Meßergebnis möglichst wenig verfälschen. Die Genauigkeit und Reproduzierbarkeit jeder einzelnen Messung soll durch dieses Verfahren erhöht werden.

Diese Aufgabe wird durch die in dem kennzeichnenden Teil des Anspruchs 1 angegebene Erfindung gelöst.

Danach werden also nicht mehr nur eine einzige Sondenspannung zu Beginn der Aufheizzeit und eine einzige Sondenspannung zum Ende der Aufheizzeit ausgewertet. Vielmehr werden die Sondenspannungen ab Beginn der Aufheizzeit beim Anschalten der Widerstandssonde an die Konstantstromquelle zunächst bis zur Hälfte der Aufheizzeit integriert und als erste Größe zur anschließenden Auswertung bereitgehalten. Anschließend werden die Sondenspannungen ab der Hälfte der Aufheizzeit bis zu deren Ende integriert, wodurch eine zweite Größe gebildet wird. Die Differenz zwischen diesen beiden Integralen ist ein Maß für die Eintauchtiefe.

Im Unterschied zu den früheren Vorschlägen wird also nicht eine einzige Sondenspannung, insbesondere die Anfangsspannung integriert, sondern es werden die Sondenspannungen über jeweils der Hälfte der Aufheizzeit integriert. Durch die Integration der Sondenspannungen heben sich viele Störungen in ihrem Einfluß auf das Integrationsergebnis heraus, während andere Störungen wie bleibende Nullpunktsabweichungen (Off-set) sich nicht mehr wie bei den früher bekannten bzw. vorgeschlagenen Verfahren auf das Meßergebnis auswirken können.

Die Genauigkeit und Reproduzierbarkeit der einzelnen Messungen während je einer Aufheizzeit werden durch dieses Verfahren also wesentlich erhöht.

Gemäß Anspruch 2 können die Integrationsvorgänge kontinuierlich während je einer Hälfte der Aufheizzeit durchgeführt werden. Zur Ausübung dieses Verfahrens dienen insbesondere Analogschaltungen, die zur Integration wenig aufwendig aufgebaut sein können.

Die Integrationsvorgänge während je einer Hälfte der Aufheizzeit können aber auch durch Summierung diskreter Sondenspannungen erfolgen. Letztgenanntes Verfahren eignet sich besonders für digital arbeitende Einrichtungen, die im Hinblick darauf zweckmäßig sind, daß weitere Funktionen wie diejenigen einer Ablaufsteuerung sowie des Speicherns des Vergleichergebnisses der durch Integration gebildeten Größen durchzuführen sind.

Ungeachtet der großen Genauigkeit und Reproduzierbarkeit der einzelnen Messungen während je einer Aufheizzeit kann auch hier das Meßergebnis durch anschließende Mittelwertbildung über mehrere Vergleichsgrößen, d. h. Aufheizzeiten verbessert werden.

Die erfindungsgemäßen Verfahren werden zweckmäßig mit einer Schaltungsanordnung nach Anspruch 5 durchgeführt. Diese Schaltungsanordnung zeichnet sich durch einen im Verhältnis zu der hohen Genauigkeit und Reproduzierbarkeit der einzelnen Messungen niedrigen Aufwand aus.

Bei einer Analogmessung kann der Aufwand nach Anspruch 15 besonders gering gehalten werden, indem ein einziger Integrator nicht nur zur Integration der Sondenspannungen während je einer Hälfte der Aufheizzeit sondern auch zur Subtraktion der während der zweiten Hälfte integrierten Sondenspannungen von den während der ersten Hälfte der Aufheizzeit integrierten Sondenspannungen genutzt wird.

Bei einer digitalen Schaltungsanordnung nach Anspruch 6 wird die Integration durch Addition kurzzeitig aufeinanderfolgend abgefragter und digitalisierter Sondenspannungen angenähert. Die Auswertung dieser summierten diskreten Sondenspannungen kann mit besonders hoher Genauigkeit durchgeführt werden.

Die Erfindung wird im folgenden anhand einer Zeichnung mit 6 Figuren erläutert. Es zeigen :

Fig. 1 und 2 Zeitdiagramme einer kontinuierlichen Integration der Sondenspannungen zur analogen Auswertung bei leerem Behälter (Fig.1) und gefülltem Behälter (Fig. 2),

Fig. 3 ein Blockschaltbild zur analogen Füllstandmessung,

Fig. 4 und 5 Zeitdiagramme zur Addition diskreter Sondenspannungen bei einem leeren Tank (Fig. 4) und einem gefüllten Tank (Fig. 5), und

Fig. 6 ein Blockschaltbild einer digitalen Einrichtung zur Füllstandmessung.

In Fig. 1 ist dargestellt, wie in typischer Weise die Sondenspannungen U in Abhängigkeit von der Zeit nach einer Ausgleichsfunktion verlaufen. Zum Zeitpunkt $t_0$ beim Einschalten einer Widerstandssonde entsteht an dieser der Spannungsabfall $U_0$ als Anfangsspannung zu Beginn der Aufheizzeit. Die Sondenspannung steigt dann nach der Ausgleichsfunktion bis zu dem Zeitpunkt $\tau$ an. Fig. 1 zeigt, daß die Sondenspannungen wegen des hohen thermischen Übergangswiderstands bei leerem Behälter verhältnismäßig stark ansteigt.

Der Füllstand wird so ermittelt, daß die Sondenspannungen zwischen den Zeiten $t_0$ und $\tau/2$ integriert werden (Fläche $A_1$) und anschließend die Sondenspannungen zwischen den Zeiten $\tau/2$ bis $\tau$ (Integral $A_2$). Durch Subtraktion des Integrals $A_2$ minus $A_1$ erhält man dann ein Maß für den Füllstand. Dabei sind Störungseinflüsse, die sich auf die Sondenspannungen U auswirken, weitgehend eliminiert.

Fig. 2 zeigt das analoge Meß- und Auswertverfahren wie in Fig. 1 jedoch für einen vollen Behälter. Es ist aus dem Verlauf der Sondenspannung ersichtlich, daß der thermische Übergangswiderstand klein ist, d. h. die Sondenspannungen steigen nur wenig an. Dementsprechend ist die Differenz der Integrale $A_2$ minus $A_1$ der Sondenspannungen zwischen $\tau/2$ bis $\tau$ einerseits und $t_0$ bis $\tau/2$ kleiner als bei leerem Behälter gemäß Fig. 1.

In Fig. 3 ist eine Schaltungsanordnung zur Ausübung des Verfahrens nach den Figuren 1 und 2 dargestellt.

Eine Ablaufsteuerung 1 schaltet eine Konstantstromquelle 2 während einer Aufheizdauer von $t_0$ bis $\tau$ an eine Widerstandssonde 3. Die an der Widerstandssonde abfallende Sondenspannung wird über einen Block 4 zur Temperaturkompensation der aus einem an die Widerstandssonde 3 angepaßten Kompensationswiderstand bestehen kann, ausgewertet :

Hierzu ist ein Integrator 5 vorgesehen, der als analog arbeitender Integrator aus einem Operationsverstärker und einer Widerstandskondensatorkombination bestehen kann. Der Integrator wird durch die Ablaufsteuerung 1 mittels eines gesteuerten Schalters 6 während der ersten Hälfte einer Aufheizzeit von $t_0$ bis $\tau/2$ über einen Inverter 7 mit der weitgehend temperaturkompensierten Sondenspannung aus dem Block 4 beaufschlagt. Es erfolgt dann die Integration von $t_0$ bis $\tau/2$ in dem Integrator. Ab $\tau/2$ schaltet der gesteuerte Schalter den Integrator unmittelbar an den Block 4 zur Temperaturkompensation, so daß die anschließend aufintegrierten Sondenspannungen direkt von dem während der ersten Hälfte der Heizzeit gebildeten Integral $t_0$ bis $\tau/2$ abgezogen werden. Dieses Vergleichsergebnis wird in einer Abtast- und Halteschaltung 8, die wiederum durch die Ablaufsteuerung gesteuert ist, bis zur nächsten Messung in einer neuen Meßperiode gespeichert.

Ein Ausgang der Abtast- und Halteschaltung ist über einen Anzeigtreiber 9 an ein Anzeigegerät 10 angeschlossen. Ein weiterer Anschluß von dem Ausgang der Abtast- und Halteschaltung 8 führt über einen Grenzwertgeber 11 zu einer Signallampe 12.

Die Auswertung diskreter Sondenspannungen nach den Figuren 4 und 5 unterscheidet sich von der Auswertung der kontinuierlich erfaßten Sondenspannungen nach den Figuren 1 und 2 durch folgendes :

Die diskreten Sondenspannungen $U_i$ werden jeweils in der ersten Hälfte der Aufheizzeit von $t_0$ bis $\tau/2$ addiert, wobei j diskrete Sondenspannungen erfaßt werden. Daraufhin erfolgt eine Addition der diskreten Sondenspannungen von j bis n. Von der Summe, die mit den diskreten Sondenspannungen j bis n gebildet wurde, wird die Summe abgezogen, die von der ersten diskreten Sondenspannung bis zu der j-ten Sondenspannung gebildet wurde.

Wie die Fig: 4 für leeren Behälter und die Fig. 5 für vollen Behälter veranschaulicht, ist die Differenz der beiden genannten Summen wiederum von dem Füllstand abhängig. Störeinflüsse, die die diskreten Sondenspannungen beeinflussen, mitteln sich ebenso wie bei dem kontinuierlichen Integrationsverfahren nach den Figuren 1 und 2 zumindest weitgehend, wenn nicht vollständig aus.

Das in Fig. 6 dargestellte Blockschaltbild einer mit einem Mikroprozessor aufgebauten Einrichtung zur elektrothermischen Füllstandmessung nach den in Figuren 4 und 5 veranschaulichten Verfahren ist wie folgt aufgebaut :

Zur Erläuterung werden für gleiche Teile wie in Fig. 3 übereinstimmende Bezugszeichen verwendet. Die Konstantstromquelle 2 ist wiederum an die Widerstandssonde 3 angeschlossen Die Stromquelle wird über eine Eingangsschutzschaltung 13 in einem Kraftfahrzeug beim Einschalten der Zündung von der Klemme 15 mit Strom versorgt. Eine Stabilisatorschaltung 14 speist weiterhin über eine Sammelleitung 16 einen Analogdigitalwandler 17, einen Mikroprozessor 18, sowie einen Digitalanalogwandler 19.

Der Mikroprozessor 18 wiederum steuert, da eine Ablaufsteuerung beinhaltend, über eine Leitung 20 die Konstantstromquelle 2, den Analogdigitalwandler 17 und den Digitalanalogwandler 19. Die Arbeitsweise des Mikroprozessors wird durch eine Überwachungsschaltung 22 kontrolliert.

Die Einrichtung nach Figur 6 arbeitet in der Weise, daß während der ersten Hälfte der Aufheizzeit, die durch Einschalten der Konstantstromquelle 2 bestimmt wird, die in dem Analogdigitalwandler digitalisierten Sondenspannungen in dem Mikroprozessor addiert werden und abgespeichert werden. Dies erfolgt während der ersten Hälfte der Aufheizzeit von $t_0$ bis $\tau/2$ · Während der darauffolgenden Hälfte der Aufheizzeit von $\tau/2$ bis $\tau$ werden wiederum die diskreten Sondenspannungen digitalisiert und in dem Mikroprozessor getrennt von den Werten, die während der ersten Hälfte der Aufheizzeit ermittelt wurden, addiert und abgespeichert. Von der zuletzt gebildeten Summe wird die zuvor gebildete Summe abgezogen, so daß die Differenz der digitalen diskreten Sondenspannungen j bis n minus den Sondenspannungen 1 bis j entsteht. Diese Differenz- oder Vergleichszahl wird in dem Digitalanalogwandler wiederum in einen analogen Anzeigewert umgewandelt und über den Anzeigetreiber 9 in dem Anzeigegerät 10 analog angezeigt. Zur Grenzwertmeldung dient wiederum ein Grenzwertgeber 11, der die Signallampe 12 einschaltet, wenn ein vorgegebener Wert von dem Zahlenwert überschritten wird, der in dem Mikroprozessor als Vergleichsergebnis der diskreten Sondenspannungen während je einer Hälfte der Aufheizzeit ermittelt wurde.

Wesentlicher Vorteil beider Einrichtungen nach den Figuren 3 und 6 ist, daß schon nach dem ersten Einschalten der Einrichtung, d. h. nach der ersten vollen Aufheizzeit schnell ein verhältnismäßig genauer Meßwert gebildet wird. Es ist also nicht unbedingt erforderlich, daß mehrere derart gebildete Meßwerte ausgemittelt werden. Jedoch erhöht eine solche Mittelwertbildung, die in den Figuren 1 bis 6 nicht dargestellt ist, weiter die Genauigkeit.

**Patentansprüche**

1. Verfahren zur elektrothermischen Umgebungstemperaturkompensierten Füllstandmessung, bei dem jeweils während einer Aufheizzeit eine Widerstandssonde (3) mit einem Konstantstrom beheizt wird, und bei dem eine aus wenigstens einer Sondenspannung zu Beginn der Aufheizzeit gebildete erste Größe mit einer aus wenigstens einer Sondenspannung zum Ende der Aufheizzeit gebildeten zweiten Größe zur Bildung einer dem Füllstand annähernd proportionalen Vergleichsgröße verglichen wird, dadurch gekennzeichnet, daß die erste Größe durch Integration der Sondenspannungen (U) von Beginn der Aufheizzeit (to) bis zur Hälfte ($\tau/2$) der Aufheizzeit gebildet wird und daß anschließend die zweite Größe durch Integration der Sondenspannungen von der Hälfte der Aufheizzeit ($\tau/2$) bis zu deren Ende ($\tau$) gebildet wird.

2. Verfahren nach Anspruch 1, dadurch gekennzeichnet, daß der Integrationsvorgang zu jeder Größe während je einer Hälfte der Aufheizzeit kontinuierlich erfolgt (Fig. 1, 2).

3. Verfahren nach Anspruch 1, dadurch gekennzeichnet, daß der Integrationsvorgang zu jeder Größe während je einer Hälfte der Aufheizzeit durch Summierung diskreter Sondenspannungen erfolgt (Fig. 4, 5).

4. Verfahren nach einem der Ansprüche 1 bis 3, gekennzeichnet durch eine Mittelwertbildung über mehrere Vergleichsgrößen.

5. Einrichtung zur elektrothermischen, Umgebungstemperaturkompensierten Füllstandsmessung mit einer geschalteten Konstantstromquelle (2) an einer Widerstandssonde (3), mit einem Integrator (5) zum Bilden einer ersten Größe aus dem Sondenspannungsverlauf zu Beginn einer Aufheizzeit und einer zweiten Größe aus dem Sondenspannungsverlauf zum Ende der Aufheizzeit der Widerstandssonde (3), mit einem Vergleicher zum Vergleich der beiden Größen und mit einer Zeitsteuereinrichtung (1) zum Ansteuern der Konstantstromquelle (2), des Integrators (5) und des Vergleichers, dadurch gekennzeichnet, daß der Eingang des Integrators (5) über einen von der Zeitsteuereinrichtung (1) gesteuerten Schalter (6) von Beginn (to) der Aufheizzeit bis zur Hälfte ($\tau/2$) der Aufheizzeit über einen Inverter (7) an die Widerstandssonde (3) zur Bildung der ersten Größe und von der Hälfte der Aufheizzeit ($\tau/2$) bis zu deren Ende ($\tau$) direkt an die Widerstandssonde (3) zur Bildung der zweiten Größe koppelbar ist, so daß der Integrator (5) den Vergleicher bildet.

6. Einrichtung zur elektrothermischen, Umgebungstemperaturkompensierten Füllstandsmessung mit einer geschalteten Konstantstromquelle (2) an einer Widerstandssonde (3), mit einem Integrator (5) zum Bilden einer ersten Größe aus dem Sondenspannungsverlauf zu Beginn einer Aufheizzeit und einer zweiten Größe aus dem Sondenspannungsverlauf zum Ende der Aufheizzeit der Widerstandssonde (3), mit einem Vergleicher zum Vergleich der beiden Größen und mit einer Zeitsteuereinrichtung (1) zum Ansteuern der Konstantstromquelle (2), des Integrators (5) und des Vergleichers, dadurch gekennzeichnet, daß die Widerstandssonde (3) über einen Analog-Digital-Wandler (17) von Beginn (to) der Aufheizzeit bis zur Hälfte ($\tau/2$) der Aufheizzeit und von der Hälfte der Aufheizzeit ($\tau/2$) der Aufheizzeit bis zu deren Ende ($\tau$) mit einem Addierer zur getrennten Addition der diskreten digitalisierten Sondenspannung während je einer Hälfte der Aufheizzeit in Verbindung steht.

**Claims**

1. Method for electrothermal, ambient temperature compensated level measurement, wherein in any respective heating period a resistor probe (3) is heated with a constant current, and wherein a first value constituted by at least one probe voltage at the start of the heating period is compared to a second value constituted by at least one probe voltage at the end of the heating period to constitute a reference value approximately proportional to the level, characterised in that the first value is constituted by integration of the probe voltages (U) from the start of the heating period (to) until halfway (τ/2) through the heating period and that afterwards the second value is constituted by integration of the probe voltages from halfway (τ/2) through the heating period until the end (τ) thereof.

2. Method according to Claim 1, characterised in that the integration operation is performed at each value during each respective half of the heating period continuously (Figs. 1 and 2).

3. Method according to Claim 1, characterised in that the integration operation is performed at each value during each respective half of the heating period by summation of discrete probe voltages (Figs. 4 and 5).

4. Method according to one of Claims 1 to 3, characterised by formation of a mean value over several reference values.

5. System for electrothermal, ambient temperature compensated level measurement comprising : a switched constant-current source (2) to a resistor probe (3) ; an integrator (5) for constituting a first value from the probe voltage curve at the start of a heating period and a second value from the probe voltage curve at the end of the heating period of the resistor probe (3) ; a comparator for comparing the two values ; and a timing device (1) for triggering the constant-current source (2), the integrator (5) and the comparator, characterised in that from the start (to) of the heating period until halfway (τ/2) through the heating period the input of the integrator (5) can be coupled to the resistor probe (3) via an inverter (7), by means of a switch (6) controlled by the timing device (1), to constitute the first value, and from halfway (τ/2) through the heating period until the end (τ) thereof direct to the resistor probe (3) to constitute the second value, so that the integrator (5) constitutes the comparator.

6. System for electrothermal, ambient temperature compensated level measurement comprising : a switched constant-current source (2) to a resistor probe (3) ; an integrator (5) for constituting a first value from the probe voltage curve at the start of a heating period and a second value from the probe voltage curve at the end of the heating period of the resistor probe (3) ; a comparator for comparing the two values ; and a timing device (1) for triggering the constant-current source (2), the integrator (5) and the comparator, characterised in that from the start (to) of the heating period until halfway (τ/2) through the heating period, and from halfway (τ/2) through the heating period until the end (τ) thereof, the resistor probe (3) is connected via an analogue-to-digital converter (17) to an adder for separate addition of the discrete digitised probe voltage during each respective half of the heating period.

**Revendications**

1. Procédé pour la mesure électrothermique de niveau, avec compensation de l'effet de la température ambiante, dans lequel, au cours de chaque période de mise en chauffe, une sonde (3) à résistance est chauffée grâce à un courant constant, et dans lequel une première grandeur, déterminée à partir d'au moins une tension de sonde du début de la période de mise en chauffe, est comparée avec une deuxième grandeur déterminée à partir d'au moins une tension de sonde à la fin de la période de mise en chauffe, en vue de déterminer une grandeur permettant une comparaison approximativement proportionnelle au niveau de remplissage, procédé caractérisé en ce que la première grandeur est déterminée par l'intégration des tensions (U) de sonde du début (to) de la période de mise en chauffe jusqu'au milieu (τ/2) de la période de mise en chauffe et en ce qu'ensuite la deuxième grandeur est déterminée par l'intégration des tensions de sonde entre le milieu (τ/2) de la période de mise en chauffe et la fin (τ) de cette dernière période.

2. Procédé selon la revendication 1, caractérisé en ce que l'opération d'intégration s'effectue en continu pour chaque grandeur pendant chacune des moitiés de la période de mise en chauffe (figures 1, 2).

3. Procédé selon la revendication 1, caractérisé en ce que l'opération d'intégration s'effectue pour chaque grandeur pendant chacune des moitiés de la période de mise en chauffe, par la totalisation de tensions de sonde séparées (figures 4, 5).

4. Procédé selon l'une des revendications 1 à 3, caractérisé en ce que l'on forme une valeur moyenne basée sur plusieurs grandeurs permettant une comparaison.

5. Dispositif pour la mesure électrothermique de niveau avec compensation de l'effet de la température ambiante, ce dispositif comportant une source (2) de courant constant branchée sur une sonde (3) à résistance, un intégrateur (5) destiné à déterminer une première grandeur à partir du tracé de la tension de sonde au début d'une période de mise en chauffe et une seconde grandeur à partir du tracé de la tension de sonde à la fin de la période de mise en chauffe de la sonde (3) à résistance, un comparateur destiné à comparer les deux quantités et un dispositif (1) de commande liée au temps destiné à la commande de la source (2) de courant constant, de l'intégrateur (5) et du comparateur, dispositif caractérisé en ce que l'entrée de l'intégrateur (5) peut être reliée grâce à un interrupteur commandé par le dispositif (1) de commande liée au temps, entre le début (to) de la période de mise en chauffe et le milieu (τ/2) de la période de mise en chauffe, par l'intermédiaire d'un inverseur (7) à la sonde (3) à résistance, en vue de déterminer et former la première grandeur et, entre le milieu (τ/2) de la période de mise en chauffe et la fin (τ) de celle-ci, directement à la sonde (3) à résistance en vue de former la deuxième grandeur, de sorte que l'intégrateur (5) constitue le comparateur.

6. Dispositif destiné à la mesure électrothermique de niveau avec compensation de l'effet de la température ambiante, ce dispositif comportant une source (2) de courant constant branchée sur une sonde (3) à résistance, un intégrateur (5) destiné à déterminer et former une première grandeur à partir du tracé de la tension de sonde du début d'une période de mise en chauffe et une deuxième grandeur à partir du tracé de la tension de sonde de la fin d'une période de mise en chauffe de la sonde (3) à résistance, un comparateur destiné à comparer les deux grandeurs et un dispositif (1) de commande liée au temps, destiné à commander la mise en circuit de la source (2) de courant constant, de l'intégrateur (5) et du comparateur, dispositif caractérisé en ce que la sonde (3) à résistance est reliée par l'intermédiaire d'un convertisseur (17) analogique-numérique du début (to) de la période de mise en chauffe au milieu ($\tau/2$) de cette dernière et du milieu ($\tau/2$) de la période de mise en chauffe à la fin ($\tau$) de cette dernière, à un dispositif de totalisation en vue d'effectuer à part l'addition de tensions numériques séparées régnant pendant chacune des moitiés de la période de mise en chauffe.

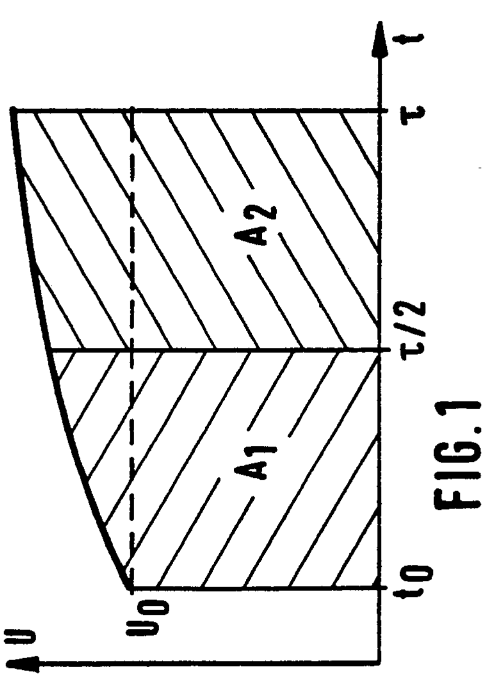


FIG.1

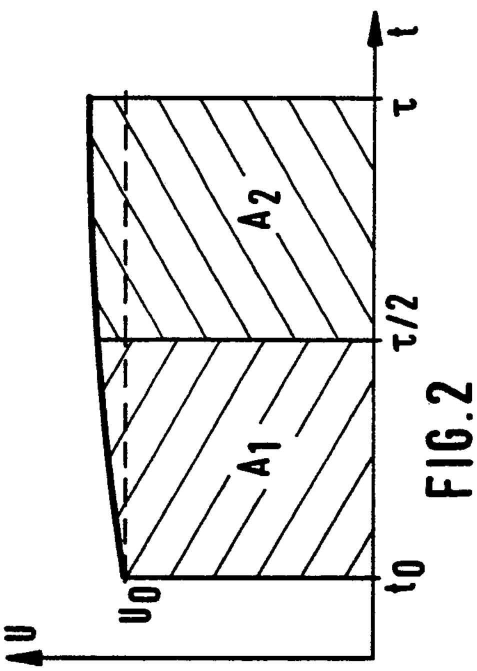


FIG.2

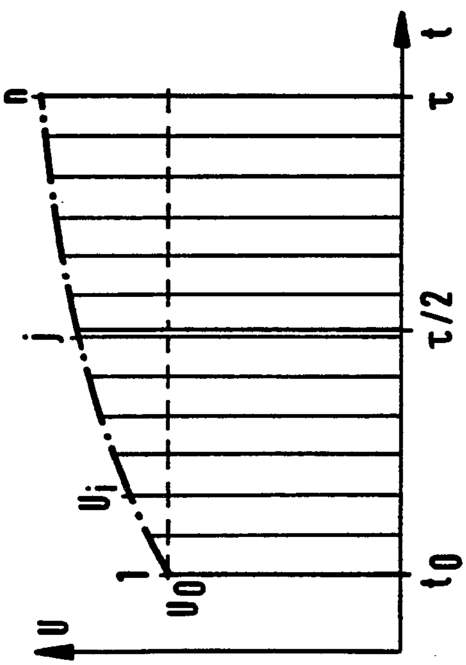


FIG.4

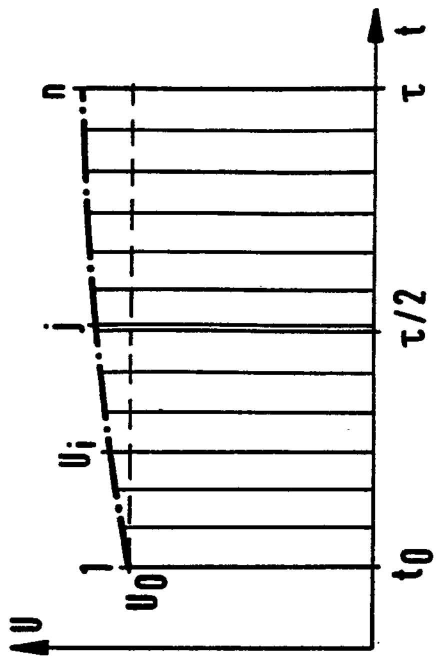


FIG.5

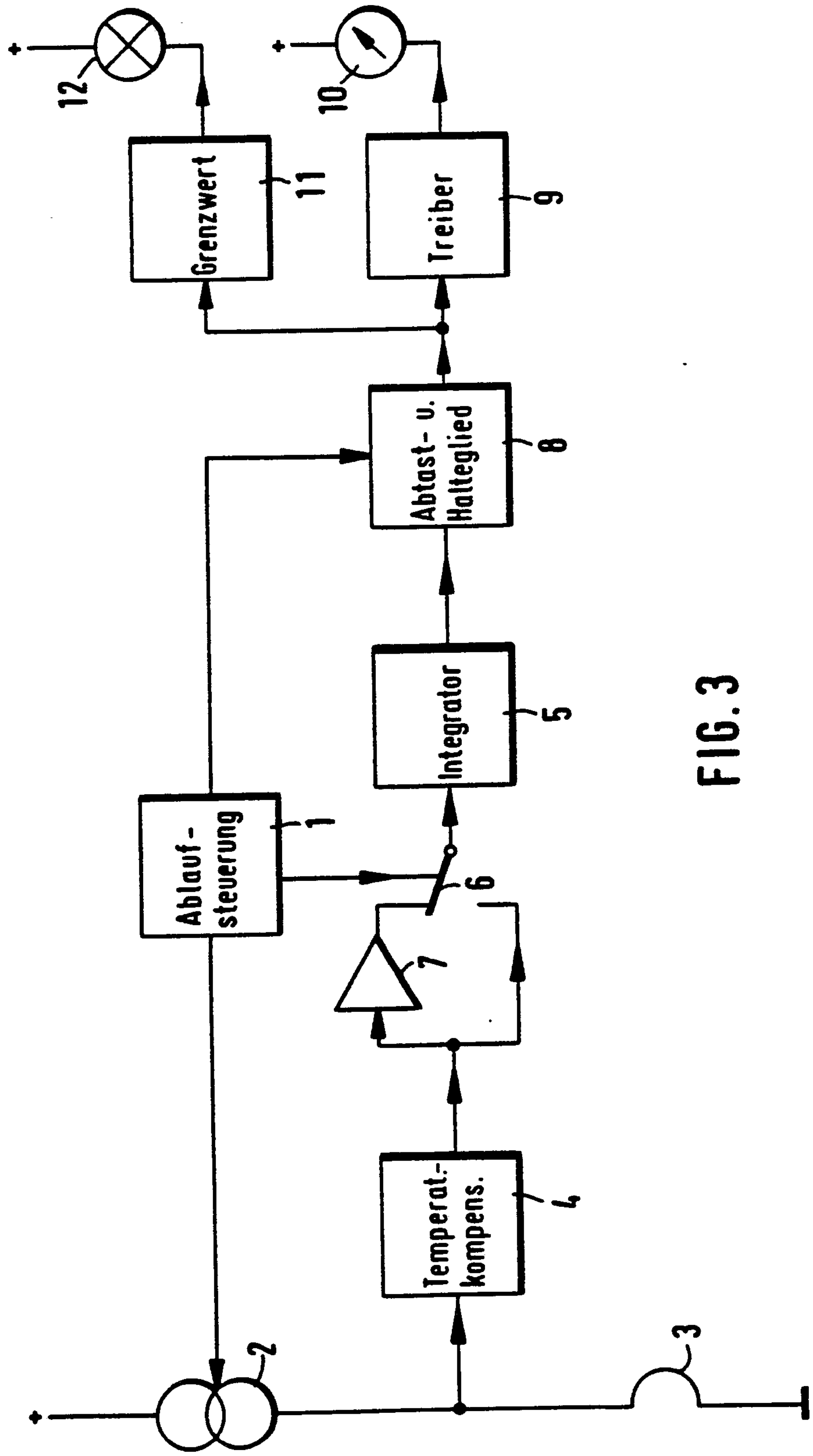

Grenzwert
11
12
Treiber
9
10
Abtast- u. Halteglied
8
Integrator
5
Ablauf- steuerung
1
6
7
Temperat.- kompens.
4
2
3


FIG. 3

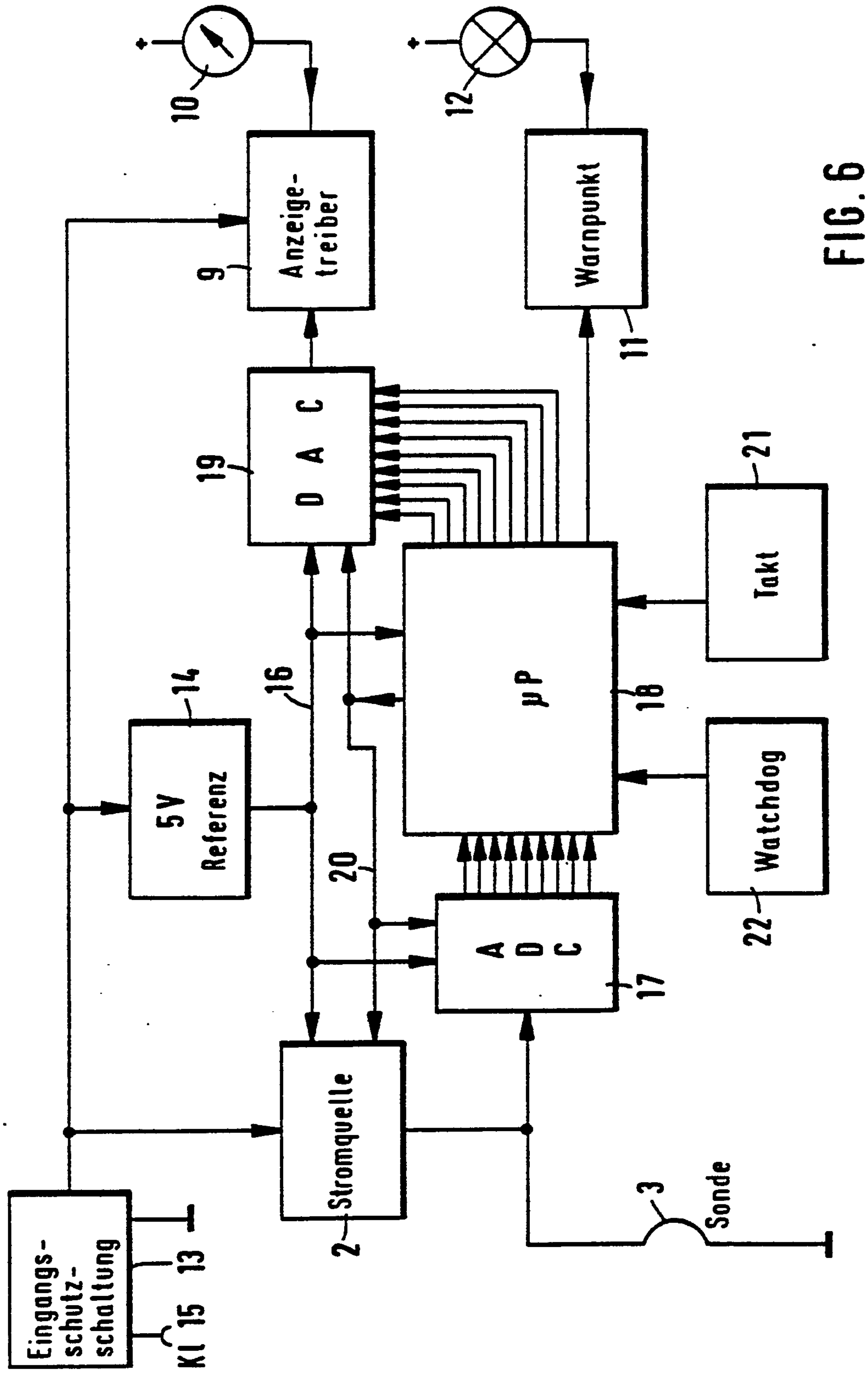
Eingangs-
schutz-
schaltung
Kl 15
13
Stromquelle
2
5V
Referenz
14
16
20
A
D
C
17
µP
18
D A C
19
Anzeige-
treiber
9
10
12
Warnpunkt
11
Takt
21
Watchdog
22
Sonde
3

FIG. 6